# FASCICULE DE BREVET EUROPEEN

(11) **EP 1 428 585 B1**
(45) Date de publication et mention de la délivrance du brevet: **10.05.2006**
(21) Numéro de dépôt: 02027942.8
(22) Date de dépôt: 13.12.2002
(51) Int. Cl.: B08B 11/02, F16M 13/00, G02C 13/00

(54) **Dispositif porte verres destiné plus particulierement au traitement des verres optiques ou autres substrats**
Vorrichtung zum Halten von optischen Gläsern, die besonders für die Behandelung von optischen Gläsern oder anderen Substraten geeignet ist
Apparatus for holding glass lenses more specifically designed for the treatement of optical glass lenses or other substrates

(43) Date de publication de la demande: 16.06.2004
(73) Titulaire: SPECIAL COATING LABORATORY INTERNATIONAL (S.C.L. INTERNATIONAL) S.A.R.L., 74160 Archamps (FR)
(72) Inventeur: Gehrig,Jean, 74580 Viry (FR); Gehrig, Denis, 74160 Saint-Julien (FR)
(74) Mandataire: Arbousse-Bastide, Jean-Claude Ph.

(56) Documents cités:
- EP-A- 0 215 261
- EP-A- 0 483 034
- DE-A- 4 418 950
- DE-U- 9 001 964
- US-A- 5 988 191

## Description

La présente invention a pour objet un dispositif porte verres destiné plus particulièrement au traitement des verres optiques ou autres substrats.

Dans le domaine du traitement des verres optiques ces derniers subissent à l'aide de dispositifs porte verres différents traitements de nettoyage et/ou d'application de produits liquides, lesdits dispositifs porte verres étant constitués d'un châssis muni d'au moins une barre horizontale et de pinces porte verre métalliques suspendues l'une derrière l'autre à ladite barre et solidarisées fixement à cette dernière par soudage afin que les pinces ne tombent pas, notamment lors du transport du dispositif ou lors d'une opération de traitement. Chaque pince porte un verre optique qui est maintenu sur ladite pince, en position sensiblement parallèle à l'axe de la tige métallique formant le corps de la pince, au moyen de deux bras de levier rappelés élastiquement l'un vers l'autre et venant saisir et serrer ledit verre entre leur deux extrémités libres par pincement de son bord périphérique et d'une butée sur lequel repose ledit verre.

Les opérations de contrôle des verres optiques sont effectuées en retirant directement lesdits verres des pinces porte verre avec les doigts ce qui a pour effet de rayer lesdits verres ou de laisser des marques de doigts qui vont s'incruster dans le verre notamment lors de sa polymérisation.

Le document EP 0483034 a pour objet un dispositif de maintien notamment de verres optiques comportant une tige horizontale sur la longueur de laquelle sont pratiquées des gorges périphériques dans lesquelles sont fixées par soudage des pinces constituées de fil métallique tordu en forme de M aux angles arrondis, dont les extrémité des branches sont pourvues de lames métalliques pliées soudées à l'intérieur desdites branches , les extrémités desdites lames métalliques étant découpées en V rentrant formant deux pointes latérales pour le maintien du verre.

Toutefois, ces dispositifs présentent du fait de leur configuration monolithique, un volume d'encombrement important ne permettant pas un stockage dans un volume réduit.

La présente invention a pour but de remédier à ces inconvénients en proposant un dispositif porte verre universel permettant de démonter facilement les pinces porte verre tout en assurant leur blocage en rotation libre autour de la barre du châssis en position de suspension.

Le dispositif porte verres selon la présente invention est destiné plus particulièrement au traitement des verres optiques ou autres substrats et est du type constitué d'un châssis comportant au moins une barre horizontale de forme cylindrique à laquelles sont suspendues des pinces porte verre se caractérise essentiellement en ce qu'une pince porte verre est constituée d'une part d'une tige centrale formant le corps de la pince et comportant à l'une de ses extrémités des moyens d'accrochage permettant de solidariser de manière amovible lesdites pinces à ladite barre l'une derrière l'autre à des emplacements espacés régulièrement et des moyens de verrouillage empêchant la rotation libre de ladite pince autour de la barre et d'autre part de moyens de maintien en position du verre sur ladite pince, ledit verre étant maintenu sensiblement parallèlement à l'axe de la tige centrale.

La tige centrale de la pince pourra être recourbée à l'une de ses extrémités pour former un crochet permettant de suspendre la pince à la barre du châssis en l'encliquetant par son crochet dans une encoche pratiquée dans ladite barre. Le crochet sera recourbé en U de manière à créer un espace délimité par les deux branches et destiné à recevoir la barre qui sera enserrée par les deux branches et dont l'une desdites branches sera engagée dans une encoche dont le fond est rectiligne de manière à empêcher la pince, par son contact avec ladite branche, de tourner librement autour de la barre.

Les moyens de maintien d'un verre optique sur une pince pourront être constitués de deux bras de levier montés autour d'un axe pivot commun, solidarisé à la tige centrale, rappelés élastiquement l'un vers l'autre de manière à saisir et à serrer le verre entre leurs extrémités libres par pincement de son bord périphérique, ledit verre reposant sur une butée s'étendant perpendiculairement de la tige centrale de la pince.

Dans un mode de réalisation préférentiel les bras de leviers seront munis à leur extrémité libre d'une pièce de contact en forme de lame comportant à son bord destiné à être en contact avec le bord périphérique du verre une découpe arrondie et incurvée délimité par deux pointes. Les bras de leviers seront de préférence réalisés en une seule pièce à partir d'une tige métallique pliée.

Les avantages et les caractéristiques de la présente invention ressortiront plus clairement de la description qui suit et qui se rapporte au dessin annexé, lequel en représente un mode de réalisation non limitatif.
- la figure 1 représente une vue en perspective partielle de l'axe du support du dispositif porte verre selon la présente invention.
- la figure 2 représente une vue de profil d'une pince porte verre portant un verre optique.

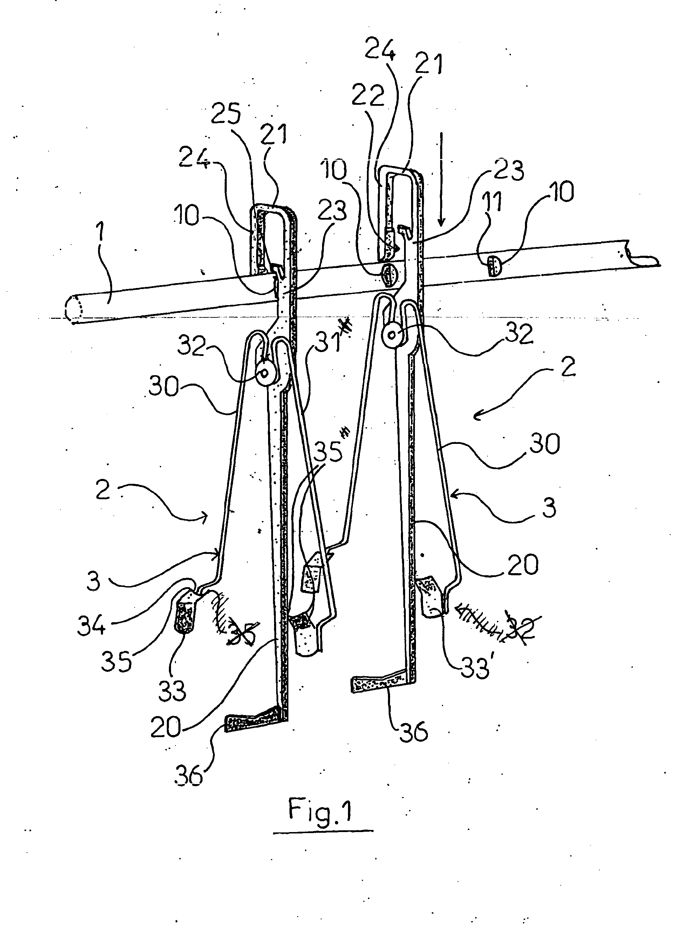

Si on se réfère à la figure 1 on peut voir qu'un dispositif porte verres selon la présente invention est constitué d'une barre 1 de forme cylindrique montée sur un châssis métallique non représenté comportant au moins une barre 1 supportant des pinces porte verre 2 solidarisée à des emplacements repérées par des encoches 10 pratiquées dans la barre 1 et espacées régulièrement.

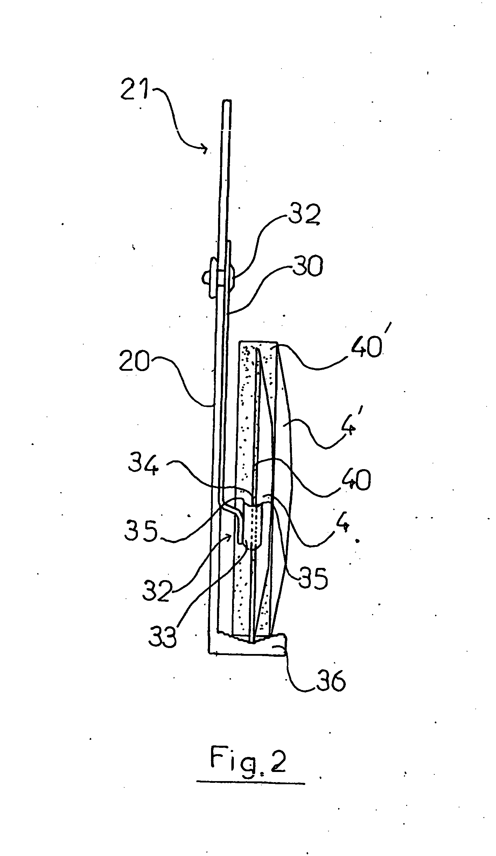

Les pinces porte verre 2 sont destinées chacune à porter un verre optique 40,40' (figure 2) ou autre substrat en vue de lui faire subir sans dommage, différents traitements de nettoyage ou d'application de produits liquides

Une pince porte verre 2 est constituée d'une part d'une tige centrale métallique 20, formant le corps de la pince, recourbée à l'une de ses extrémités pour former un crochet 21 en U permettant de la suspendre à la barre 1 en l'encliquetant par son extrémité recourbée 21 dans une encoche 10 et d'autre part de moyens de saisie et de serrage 3 du verre 40,40' permettant de le maintenir sur la pince sensiblement parallèlement à l'axe de la tige 20 par pincement son bord périphérique comme on peut le voir sur la figure 2.

L'espace 22 créé entre les branches 23,24 du U est destiné à recevoir la barre 1 qui est enserrée entre une partie des branches 23,24 dont l'une 23 de ces dernières est engagée dans une encoche 10 dont le fond 11 est également rectiligne, le contact entre les deux faces rectilignes respectivement de l'une des branches et du fond de l'encoche ayant pour effet d'empêcher la tige centrale 20 de tourner librement autour de la barre 2 et de tomber, ceci notamment lors d'un transport du support ou lors de l'évolution du support dans une chaîne de traitement.

On peut voir que la profondeur de l'espace 22 destinée à recevoir la barre 1 entre les branches 23,24 du U est délimité par une butée 25 pratiquée dans la branche interne 24 du U.

Les pinces porte verre 2 peuvent ainsi être montées ou démontées facilement de la barre 1 par simple encliquetage du crochet 21 dans les encoches 10 et il est alors possible d'effectuer des contrôles du verre optique sans le toucher directement avec les doigts en retirant la pince 2 correspondante du châssis.

On peut voir également sur la figure 2 que les moyens de saisie 3 du verre optique sont constitués par une tige métallique de faible épaisseur pliée en son milieu de manière à former deux bras de levier 30,31 et solidarisée au niveau de sa pliure au corps 20 de la pince 2 grâce à un rivet 32. Les deux bras de levier 30,31 sont rappelés élastiquement l'un vers l'autre ce qui permet de pincer le verre optique 4,4' entre les deux extrémités libre 35 des bras 30, 31 par l'intermédiaire d'une pièce de contact 33 comme on peut le voir sur la figure 2.

La pièce de contact 33 est une pièce métallique en forme de lame comportant à son extrémité destinée à être en contact avec le verre optique 4,4' une découpe incurvée 34 permettant de tenir des verres optiques 4,4' d'épaisseurs variables.

Les découpes incurvées 34 font apparaître chacune deux pointes 35 permettant de tenir un verre optique 4' de grande épaisseur en disposant périphérique 40 du verre 4 entre les pointes 35 ce qui a pour effet, notamment après une application de vernis ou autre liquide, de ne pas altérer ce dernier du fait d'une surface de contact réduite.

Les verres optiques 4' de faible épaisseur sont maintenus en disposant leur bord périphérique 40' du entre les deux pointes 35 de chaque découpe 34.

Les pinces ainsi obtenues permettent d'éviter des consommation importantes de liquide ou de vernis après trempage contrairement aux pinces actuelles. En outre le dispositif porte verres selon la présente invention permet un démontage aisé des pinces tout en conservant une position fixe des pinces une fois suspendues sur la barre du châssis même en cas de retournement où les pinces et les verres restent en position sans tomber.

## Revendications

1. Dispositif porte verres destiné plus particulièrement au traitement des verres optiques (4,4') ou autres substrats, du type constitué d'un châssis comportant au moins une barre (1) horizontale de forme cylindrique à laquelle sont suspendues des pinces porte verre (2) munies chacune de moyens de maintien (3) en position du verre sur ladite pince (2) sensiblement parallèlement à l'axe de la tige centrale (20) **caractérisé en ce qu'**une pince porte verre (2) est constituée d'une part d'une tige centrale (20) formant le corps de la pince (2) et comportant à l'une de ses extrémités des moyens d'accrochage (21,22,25) permettant de solidariser de manière amovible lesdites pinces à ladite barre l'une derrière l'autre à des emplacements (10) espacés régulièrement et des moyens de verrouillage (23,24,25) empêchant la rotation libre de ladite pince (2).

2. Dispositif porte verres selon la revendication 1 **caractérisé en ce que** la tige centrale (20) est recourbée à l'une de ses extrémités pour former un crochet permettant de suspendre la pince à la barre (1) en l'encliquetant par son crochet dans une encoche (10) pratiquée dans la barre (1).

3. Dispositif porte verre selon la revendication 2 **caractérisé en ce que** le crochet (21) est recourbé en U de manière à créer un espace (22) délimité par les deux branches (23,24) du U et destiné à recevoir la barre (1) qui est enserrée par les deux branches (23,24) et dont l'une des branches est engagée dans une encoche (10) dans le fond (11) est rectiligne de manière à empêcher, par son contact avec ladite branche (23,24), la pince (2) de tourner librement autour de la barre (1).

4. Dispositif porte verres selon l'une quelconque des revendications précédentes **caractérisé en ce que** les moyens de maintien (3) d'un verre optique sur une pince (2) sont constitués de deux bras de levier (30, 31) montés autour d'un axe pivot (32) commun, solidarisé à la tige centrale (20), rappelés élastiquement l'un vers l'autre de manière à saisir et à serrer le verre entre leurs extrémités libres par pincement de son bord périphérique (40,40'), ledit verre reposant sur une butée (36) s'étendant perpendiculairement de la tige centrale de la pince.

5. Dispositif porte verres selon la revendication 4 **caractérisé en ce que** les bras de leviers (30,31) sont munis à leur extrémité libre d'une pièce de contact (33) en forme de lame comportant à son bord destiné à être en contact avec le bord périphérique (40,40') du verre (4,4') une découpe (34) arrondie et incurvée délimité par deux pointes (35).

6. Dispositif porte verres selon la revendication 4 ou la revendication 5 **caractérisé en ce que** les bras de leviers (30,31) sont réalisés en une seule pièce à partir d'une tige métallique pliée.

## Patentansprüche

1. Gläserträgervorrichtung, die insbesondere für die Behandlung von optischen Gläsern (4, 4') oder anderen Substraten vorgesehen ist, des Typs bestehend aus einem Rahmen mit zumindest einer horizontalen Stange (1) zylindrischer Form, an die Glasträgerzangen (2) aufgehängt sind, die jeweils über Mittel (3) zur Positionshaltung des Glases auf der Zange (2) leicht parallel zur Achse des Zentralstiftes (20) verfügen, **dadurch gekennzeichnet dass** eine Glasträgerzange (2) einerseits aus einem Zentralstift (20) besteht, der den Körper der Zange (2) bildet und der an einem seiner Enden Aufhängemittel (21, 22, 25) umfasst, die es erlauben, die Zangen auf abnehmbare Weise hintereinander an regelmäßig voneinander abstehenden Stellen (10) an der Stange zu befestigen, und aus Verriegelungsmitteln (23, 24, 25), die die freie Drehung der Zange (2) verhindern.

2. Gläserträgervorrichtung nach Anspruch 1, **dadurch gekennzeichnet, dass** der Zentralstift (20) an einem seiner Enden gebogen ist, um einen Haken zu bilden, der es erlaubt, die Zange an der Stange (1) aufzuhängen, indem sie mit ihrem Haken in einer Kerbe (10), die in der Stange (1) vorgenommen wird, eingerastet wird.

3. Gläserträgervorrichtung nach Anspruch 2, **dadurch gekennzeichnet, dass** der Haken (21) U-förmig gebogen ist, um einen Zwischenraum (22) zu bilden, der durch die beiden Bügel (23, 24) vom U abgegrenzt wird und der dazu dient, die Stange (1) aufzunehmen, die von den beiden Bügeln (23, 24) umschlossen ist und von denen der eine Bügel in eine Kerbe (10) eingeführt ist, von der der Grund (11) geradlinig ist, um durch ihren Kontakt mit dem Bügel (23, 24) zu vermeiden, dass die Zange (2) frei um die Stange (1) dreht.

4. Gläserträgervorrichtung nach einem der vorhergehenden Ansprüche, **dadurch gekennzeichnet, dass** die Haltemittel (3) eines optischen Glases auf einer Zange (2) aus zwei Hebelarmen (30, 31) bestehen, die um eine gemeinsame Drehachse (32) montiert sind, die am Zentralstift befestigt ist, die sich derart gegenseitig elastisch zurückrufen, dass sie das Glas greifen und durch Klemmen seines peripheren Randes (40, 40') zwischen ihren freien Enden einspannen, wobei das Glas auf einem Anschlag (36) ruht, der sich im rechten Winkel zum Zentralstift der Zange erstreckt.

5. Gläserträgervorrichtung nach Anspruch 4, **dadurch gekennzeichnet, dass** die Hebelarme (30, 31) an ihrem freien Ende mit einem Kontaktstück (33) in Form eines Plättchens versehen sind, das an seinem Rand, das in Kontakt mit dem peripheren Rand (40, 40') des Glases (4, 4') sein soll, eine abgerundete und einwärts gekrümmte Aussparung (34) aufweist, die durch zwei Spitzen (35) abgegrenzt ist.

6. Gläserträgervorrichtung nach Anspruch 4 oder nach Anspruch 5, **dadurch gekennzeichnet, dass** die Hebelarme (30, 31) anhand eines geknickten Metallstifts in einem Stück realisiert sind.

## Claims

1. Lens-holder device intended particularly for use in the treatment of optical lenses (4, 4') or other substrates, of the type consisting of a frame including at least one horizontal bar (1), cylindrical in shape, from which hang lens-holder clamps (2) each fitted with a means of holding (3) the lens in place on the said clamp (2), more or less parallel to the axis of the central rod (20), **characterised in that** one lens-holder clamp (2) consists on the one hand of a central rod (20) forming the body of the clamp (2) and including at one of its ends means of attachment (21, 22, 25) allowing the said clamps to be connected, although they will be also be removable, to the said bar one behind the other at regularly spaced intervals (10) and means of locking (23, 24, 25) preventing the free rotation of the said clamp (2).

2. Lens-holder device according to claim 1 **characterised in that** the central rod (20) is curved at one of its ends to form a hook allowing the clamp to be hung on the bar (1) by snapping it via its hook into a notch (10) made in the bar (1).

3. Lens-holder device according to claim 2 **characterised in that** the hook (21) is curved into a U shape so as to create a space (22) delimited by the two arms (23, 24) of the U and intended to receive the bar (1), which is held tight by the two arms (23, 24) and one of whose arms is engaged in a notch (10) the bottom (11) of which is straight so as to prevent, by its contact with the said arm (23, 24), the clamp (2) turning freely around the bar (1).

4. Lens-holder device according to any one of the preceding claims **characterised in that** the means of holding (3) an optical lens on a clamp (2) consist of two lever arms (30, 31) mounted around the same pivot axis (32), connected to the central rod (20), pulled elastically towards each other so that they grasp and hold the lens between their free ends by pinching its peripheral rim (40, 40'), the said lens resting on a stopper (36) extending in perpendicular fashion from the central rod of the clamp.

5. Lens-holder device according to claim 4 **characterised in that** the lever arms (30, 31) are fitted at the free ends with a contact part (33) in the form of a blade including on the edge of it intended to be in contact with the peripheral rim (40, 40') of the lens (4, 4') a rounded, curved cut-out (34) delimited by two points (35).

6. Lens-holder device according to claim 4 or claim 5 **characterised in that** the lever arms (30, 31) consist of a single part made from a folded metal rod.
